# DEMANDE DE BREVET EUROPEEN

(11) **EP 2 355 442 A1**
(43) Date de publication de la demande: **10.08.2011**
(21) Numéro de dépôt: 11150415.5
(22) Date de dépôt: 07.01.2011
(51) Int. Cl.: H04L 29/06, A63F 13/12

(54) **Captation de scène issue d'un monde virtuel ou d'un jeu video**

(30) Priorité: 08.01.2010 FR 1050087
(71) Demandeur: France Telecom, 75015 Paris (FR)
(72) Inventeur: Faure, David, 75014 Paris (FR); Piegay, Romain, 75011 Paris (FR); Vongphouthone, Aline, 92130 Issy Les Moulineaux (FR)
(74) Mandataire: Cabinet Plasseraud

(57) **Abrégé**

Dans un réseau de gestion de service de transmission, à au moins un terminal dans un réseau, d'une scène dans un monde virtuel issu d'un jeu vidéo ou d'une application collaborative, le monde virtuel correspond à la mise en oeuvre d'une application numérique et est accessible via une entité virtuelle déclarée auprès de ladite application. Au moins une entité virtuelle est allouée pour le monde virtuel. Une transmission de la scène est requise au préalable sur la base d'informations de captation.

Au niveau d'une entité de captation, on déclenche (201) une occurrence de l'application numérique. Puis, on déclare (202) l'entité virtuelle auprès de l'application numérique. Ensuite, on positionne (203) l'entité virtuelle dans le monde virtuel sur la base des informations de captation. Enfin, on obtient (204) un flux de données relatives à la scène dans le monde virtuel. Il est ainsi possible de transmettre (205) le flux de données à destination du au moins un terminal.

## Description

La présente invention concerne le monde virtuel, c'est-à-dire le monde créé artificiellement par applications numériques, et plus particulièrement un accès à ce monde virtuel de manière distante.

Un utilisateur d'un réseau peut avoir accès à de nombreux mondes virtuels, comme par exemple les mondes virtuels des jeux vidéo à distance, ou jeux vidéo en ligne. En effet, il est aujourd'hui possible de jouer à un jeu vidéo à partir d'un serveur distant, sans que les contenus du jeu vidéo décrivant le monde virtuel considéré ne soient stockés en local au niveau de l'utilisateur. Dans ce contexte, on prévoit de créer une instance de jeu par utilisateur au niveau du serveur distant. Puis, les contenus 3D correspondant au monde virtuel du jeu vidéo sont transmis selon un flux de données vers le terminal de l'utilisateur, qui peut par exemple être son ordinateur, mais aussi son poste de télévision ou encore son téléphone mobile.

De cette façon, un utilisateur peut avoir accès à un mode virtuel distant. Mais dans ce contexte, l'infrastructure utilisée doit permettre une grande réactivité entre le monde virtuel géré au niveau du serveur et le terminal utilisateur de sorte à éviter les temps de latence relatifs aux actions de l'utilisateur dans le jeu vidéo. Ainsi, un tel système de jeux vidéo à distance, comme par exemple les systèmes de jeux vidéo en ligne, sont complexes car ils obéissent à des contraintes spécifiques aux interactions de joueurs dans ce type de jeux vidéo en ligne.

La présente invention vise à améliorer la situation.

Un premier aspect de la présente invention propose un procédé de captation d'une scène dans un monde virtuel, le monde virtuel étant mis en oeuvre par une application numérique dont une occurrence est exécutée par un serveur d'hébergement applicatif et étant accessible via une entité virtuelle déclarée auprès d'une occurrence de ladite application, ledit procédé comprenant les étapes suivantes au niveau d'une entité de captation connectée au serveur d'hébergement applicatif et communiquant via un réseau avec un terminal :
/a/ recevoir de la part du terminal une requête de transmission de ladite scène comprenant des informations de captation;
/b/ déclarer une entité virtuelle auprès de l'application numérique exécutée par le serveur d'hébergement applicatif;
/c/ positionner ladite entité virtuelle dans le monde virtuel sur la base desdites informations de captation ; et
/d/ obtenir de la part du serveur d'hébergement applicatif un flux de données relatives à ladite scène dans le monde virtuel ; et
/e/ transmettre le flux de données obtenu à travers ledit réseau à destination dudit terminal.

Aucune limitation n'est attachée au type du réseau considéré ici. Ce réseau est adapté pour une transmission d'une scène d'un monde virtuel à destination d'au moins un terminal. Une telle transmission peut être de différents types. Ainsi, il est notamment possible d'envisager une transmission d'un flux de données correspondant à une scène d'un monde virtuel sur requête pour un terminal du réseau. Dans ce contexte, cette transmission peut être une transmission point à point entre un serveur effectuant la transmission dans le réseau et le terminal pour lequel à été requise cette transmission.

On peut également envisager une transmission de type multi diffusion de cette scène de monde virtuel. Il est également aisé de prévoir une transmission de type diffusion générale de ce flux de données correspondant à la scène du monde virtuel requise.

Il convient également de noter qu'aucune limitation n'est attachée à l'exécution des étapes /a/ à /e/ dans le temps. En effet, par exemple, l'étape /a/ peut être effectuée à un moment bien antérieur à celui auquel sont effectuées les autres étapes qui suivent. En outre, l'étape /e/, étape de transmission, peut aussi être avantageusement effectuée plus tard dans le temps après les étapes /b//d/ de manière à transmettre en différé le flux de données.

Un mode de réalisation de la présente invention est applicable à tout type d'application numérique permettant de représenter un monde virtuel. On entend par les termes 'monde virtuel', un monde artificiel créé par des applications numériques. Ce monde virtuel peut être soit en deux dimensions, soit encore en trois dimensions. Un tel monde virtuel est accessible par un utilisateur via des entités virtuelles. De telles entités virtuelles peuvent correspondre à n'importe quelle entité qui est prévu dans le monde virtuel considéré. Elles peuvent notamment correspondre à des personnages virtuels, tels que des avatars.

Une application numérique peut simuler un monde virtuel tel que celui de 'Second Life'. Ce monde virtuel est accessible par un utilisateur qui déclare une entité virtuelle à l'application numérique. Dans ce type d'application, une telle entité virtuelle correspond à un personnage virtuel, appelé avatar, ou à un quelconque objet virtuel (vaisseau spatial, voiture de course, ou autre objet fixe ou mobile etc ...).

Dans le contexte d'un jeu vidéo en ligne, il est possible d'accéder au monde virtuel, généré par l'application numérique considérée, via un joueur virtuel qui est alors une entité virtuelle. Certaines applications numériques de ce type permettent également un accès au monde virtuel qu'elles représentent en vue d'une administration du jeu ou du monde virtuel de manière générale. Un tel accès administratif au monde virtuel est connu sous les termes 'accès en mode fantôme' ou encore 'ghost mode' en anglais.

Quoiqu'il en soit, le monde virtuel est accessible par une entité virtuelle. Classiquement, lorsqu'un utilisateur d'un terminal en réseau souhaite intégrer un mode virtuel mis en oeuvre et simulé par un serveur applicatif, une occurrence d'une application numérique cliente est exécutée en local au niveau de son terminal, cette application numérique cliente étant apte à communiquer avec le serveur applicatif. Ensuite, l'utilisateur déclare son entité virtuelle. Puis, le terminal reçoit via le réseau depuis le serveur applicatif, les données relatives au monde virtuel auquel il a accédé via son entité virtuelle. Classiquement encore, lorsque des changements se produisent dans le monde virtuel représenté au niveau du terminal, le serveur applicatif transmet des données de mises à jour du monde virtuel à ce terminal. Ainsi, l'utilisateur du terminal dispose d'un monde virtuel interactif qui évolue en fonction de ses actions mais aussi en fonction d'actions d'autres utilisateurs au niveau d'autres occurrences de l'application numérique cliente. Un tel utilisateur peut en outre voir en temps réel les autres avatars présents dans le monde à proximité de l'avatar qui le représente. Il peut en outre avoir des communications synchrones avec d'autres avatars représentés dans le monde virtuel (par exemple par messagerie instantanée, VoIP).

Dans le contexte d'une application numérique de type `jeux vidéo en ligne', les participants au jeu vidéo reçoivent les contenus (objets 3D, textures, texte, vidéo, etc...) du monde virtuel dans lequel le jeu se pratique. Avantageusement, selon un mode de réalisation de la présente invention, certaines scènes pourraient être transmises dans le réseau à des terminaux pour être visionnées par des utilisateurs qui n'ont pas participé au jeu vidéo considéré. Il est par exemple possible de capter une scène relative à un combat entre joueurs virtuels au sein d'un monde virtuel d'un jeu vidéo où se déroulent des combats, ou encore une scène relative à une course automobile pour un jeu vidéo de compétition automobile, etc ... Ainsi, des utilisateurs qui ne participent pas au jeu peuvent recevoir les vidéos des scènes de ce jeu qui ont été captées, en direct (en `live**´**) ou non.

Dans le contexte d'une application relative à un monde virtuel tel que 'Second Life', un utilisateur incarne un personnage virtuel, ou `avatar**´**, dans le monde virtuel qui est parfois créé par les utilisateurs eux-mêmes. Dans ce type de monde virtuel, il est prévu de programmer des évènements de tout genre, comme par exemple un concert, une conférence de presse, une exposition ou autre. Ces évènements ne sont aujourd'hui accessibles qu'aux utilisateurs de l'application elle-même. Il peut être intéressant de proposer à d'autres utilisateurs du réseau un accès à certaines scènes qui se déroulent dans ce monde virtuel. Il convient de noter que dans ce type de monde virtuel, le monde réel peut être introduit. En effet, certains de ces évènements qui peuvent y être programmés correspondent éventuellement à des évènements du monde réels. Ainsi, une conférence de presse accessible dans le monde virtuel de 'Second Life' peut correspondre à une conférence de presse réelle. Selon un mode de réalisation de la présente invention, certaines scènes de ce monde virtuel sont accessibles par des utilisateurs autres que ceux qui sont actifs dans le monde virtuel.

Selon un mode de réalisation, un serveur accède au monde virtuel pour y capter une scène afin de pouvoir la transmettre en direct ou en différé par le biais d'une vidéo à au moins un terminal du réseau sans que ce dernier n'ait un quelconque besoin de déclarer une entité virtuelle.

Il est ici prévu, d'un côté, un terminal et, d'un autre côté, une entité de captation qui est en charge de récupérer des données relatives à la scène requise du monde virtuel afin de les transmettre à ce terminal. De manière plus précise, une requête est faite pour le terminal considéré afin que ce dernier reçoive une scène du monde virtuel.

Cette requête peut provenir de tout type d'origine, comme par exemple le terminal lui-même ou encore un serveur d'un fournisseur de service pour le terminal. Ensuite, sur réception de cette requête, l'entité de captation selon un mode de réalisation de la présente invention accède au monde virtuel en simulant en quelque sorte une participation applicative au monde virtuel.

A cet effet, l'entité de captation peut alors disposer d'une entité virtuelle afin d'accéder au monde virtuel. Ainsi, l'entité de captation peut gérer un ensemble d'entités virtuelles par application numérique considérée. Elle est alors en mesure de déclencher une exécution d'une occurrence de l'application correspondante sur chaque réception de requête de transmission de scène, pour ensuite y déclarer une entité virtuelle. Ainsi, sur une simple requête de transmission, l'entité de captation est adaptée pour accéder au monde virtuel et obtenir les données qui correspondent à la scène requise.

Plus précisément, cette requête de transmission indique des informations de captation qui définissent en quelque sorte le contexte dans lequel la captation d'images est à effectuer par l'entité de captation. Ces informations de captation peuvent notamment indiquer le type d'application concernée.

L'entité de captation déclenche une exécution d'une occurrence de l'application numérique correspondante, puis il déclare une entité virtuelle auprès de cette application. Cette déclaration d'entité virtuelle est fonction du type d'application considéré. L'entité de captation est adaptée pour connaître les mécanismes de déclaration de tous les types d'application qu'il gère. Cette déclaration peut par exemple consister en une authentification d'utilisateur, notamment sur la base d'un identifiant de type 'login' et d'un mot de passe. Aucune limitation n'est attachée à cet aspect dans le contexte de la présente invention.

Ensuite, il convient de positionner l'entité virtuelle au sein du monde virtuel de l'application numérique considérée. De manière générale, cette étape de positionnement de l'entité virtuelle est effectuée sur la base des informations de captation indiquées dans la requête reçue au niveau de l'entité de captation.

Ce positionnement est également fonction du type d'application numérique du monde virtuel. En effet, il convient de noter qu'une entité virtuelle dans une application de jeu vidéo de course automobile n'est pas localisée de la même manière qu'une entité virtuelle dans une application numérique de type `Second Life´. Dans le premier cas, l'entité virtuelle peut être un personnage virtuel installé dans un véhicule qui fait des tours de piste. De préférence, lorsque le jeu prévoit un mode "Ghost", le personnage virtuel déclaré peut être un personnage virtuel existant dans le monde virtuel, en l'occurrence un joueur particulier: une telle déclaration nécessite toutefois de s'authentifier auprès de l'application avec un compte administrateur.

Dans le cas d'un personnage virtuel installé dans un véhicule, la position de l'entité virtuelle correspond à celle du véhicule. On peut ensuite par exemple prévoir que le véhicule de ce personnage virtuel est à l'arrêt pendant toute la phase de captation de la scène du monde virtuel, ou que ce véhicule est en course autour de la piste. Dans ce contexte applicatif, les informations de captation peuvent alors indiquer une information relative au véhicule du personnage virtuel : 'arrêt' ou 'en course'. On peut donc ainsi choisir un référentiel de captation (soit à l'arrêt soit en mouvement) et l'indiquer dans la requête de transmission de la scène.

Dans un contexte applicatif du type 'Second Life', l'étape de positionnement peut être effectuée sur la base de paramètres de positionnement au niveau de l'application elle-même dans le monde virtuel correspondant. Ces paramètres de positionnement correspondent à des coordonnées spatiales dans le monde virtuel. Ils peuvent donc être inclus dans les informations de captation. Ainsi, l'entité de captation peut positionner facilement son personnage virtuel afin d'obtenir les images de la scène requise, tout comme un utilisateur participant de 'Second Life' le ferait.

Une fois que l'entité de captation a déclaré l'entité virtuelle et l'a positionnée, elle commence à obtenir un flux de données correspondant à la scène observée dans le monde virtuel par cette entité virtuelle, positionnée et orientée conformément aux informations de captation fournies. Ce flux de données est le flux que visionnerait un utilisateur qui aurait défini une telle entité virtuelle (représentant par exemple son personnage / avatar) directement auprès de l'application numérique.

Puis, l'entité de captation est en mesure de transmettre ce flux de données à un ou plusieurs terminaux du réseau pour lesquels la scène du monde virtuel est requise.

Il convient de noter que cette étape de transmission du flux de données aux terminaux peut être dé-corrélée dans le temps de l'étape de réception du flux de données au niveau de l'entité de captation.

L'obtention du flux de données par l'entité de captation peut être réalisée de différentes manières. Soit la scène est déjà mémorisée par l'application lors de son installation sur le serveur d'hébergement applicatif, soit, lorsque le monde virtuel peut être modifié par des utilisateurs non passifs, (comme c'est le cas par exemple dans le contexte de "Second Life"), les modifications de la scène générée par l'application numérique cliente de ces utilisateurs non passifs sont envoyées au serveur d'hébergement applicatif pour être stockées et redistribuées le cas échéant aux autres entités virtuelles présentes au même moment dans la scène, c'est-à-dire notamment à l'entité de captation. Dans ce deuxième cas, la scène est affichée par l'application numérique cliente exécutée par le serveur d'hébergement applicatif, et son rendu à l'écran est capté afin d'être transformé en flux vidéo (par exemple au format MPEG).

En effet, une fois que le flux de données correspondant à la scène requise est obtenu au niveau de l'entité de captation, il peut alors être soit stocké dans une base de données en vue d'une transmission différée, soit encore transmis au terminal ou aux terminaux de manière quasiment simultanée à son obtention, comme cela peut être avantageux dans le cas d'une transmission en direct d'un évènement qui se produit dans le monde virtuel considéré, en mode de transmission 'live'.

Dans ces conditions, le terminal peut assister de manière passive à une scène du monde virtuel sans toutefois être utilisateur de l'application numérique simulant ce monde virtuel. Cet accès à une scène du monde virtuel peut avantageusement rester transparent pour le terminal.

L'entité virtuelle déclarée par l'entité de captation définit en quelque sorte une caméra virtuelle que l'on introduit dans le monde virtuel de telle sorte qu'elle soit en mesure de capter les images de la scène requise.

Le terminal à qui est transmis cette scène requise peut être un téléphone mobile, ou encore une télévision ou un ordinateur ou de manière générale, tout récepteur adapté pour recevoir un flux de données transmis dans le réseau et représentant une séquence d'images d'un monde virtuel.

Grâce à ces dispositions, il est aisé de proposer à un terminal un accès à une scène déterminée dans un monde virtuel applicatif avec lequel il n'a a priori aucun lien. Ainsi, un utilisateur d'un terminal quelconque peut par exemple visionner une conférence de presse transmise dans un monde virtuel. Dans un mode de réalisation, les informations de captation indiquent un type d'application numérique. Alors le procédé peut comprendre en outre l'étape suivante avant l'étape /a/ :
- sélectionner, en fonction du type d'application numérique indiqué par les informations de captation, l'application numérique à déclencher parmi une liste d'applications numériques.

Ici, on prévoit donc qu'on est en mesure de gérer ce procédé pour une pluralité d'applications de types différents, comme par exemple des jeux en ligne ou encore un monde virtuel comme Second Life'. Dans ce contexte, il peut être avantageux que les informations de captation transmises lors de la requête de la transmission indiquent le type d'application auquel correspond le monde virtuel visé. Cette étape de sélection peut être effectuée au niveau de l'entité de captation. Si plusieurs entités de captation sont gérées dans le réseau, il est avantageux de prévoir une entité de contrôle centralisée qui les gère. Dans ce cas, cette entité de contrôle est en charge de la réception des requêtes de transmission et de leur traitement. Cette étape de sélection de l'application à déclencher peut alors être mise en oeuvre au niveau de l'entité de contrôle.

De manière générale, les fonctionnalités mises en oeuvre dans le contexte de la présente invention peuvent être localisées de manière indépendante les unes des autres n'importe où dans le réseau.

On peut prévoir que les informations de captation indiquent des coordonnées spatiales dans le monde virtuel et un axe de visée de captation de la scène. Ces caractéristiques sont aisées à mettre en oeuvre dans le contexte d'applications du type 'Second Life' dans lesquelles les utilisateurs ont accès aux paramètres de géo-localisation virtuelle. Ainsi, l'entité de captation peut aisément par la suite obtenir un flux de données qui correspond exactement à la prise de vue qui a été spécifiée dans la requête de transmission.

On peut également prévoir que les informations de captation indiquent une référence temporelle. Tout ou partie des étapes /b/ à /d/ peuvent alors être déclenchées sur la base de ladite référence temporelle.

Ces caractéristiques permettent de prendre en compte des requêtes de transmission d'une scène qui se déroulera ultérieurement dans le monde virtuel de l'application considérée. Ainsi, grâce à ces dispositions on peut gérer aisément une programmation de transmission ou de diffusion de scènes à venir. Par exemple, si un concert est programmé à une date D, à l'heure H et qu'un fournisseur de chaîne de télévision souhaite diffuser ce concert aux abonnés de cette chaîne, il peut aisément programmer cette transmission en spécifiant le lieu, et la référence temporelle à laquelle l'événement aura lieu pour déclencher la captation de la scène à cette référence temporelle. Ensuite, la transmission ou diffusion de ce concert peut être soit en live, soit en différé, et dans ce cas le flux de données est stocké avant d'être transmis.

Dans ce dernier cas notamment, le flux de données obtenu est avantageusement stocké dans une base de données en vue d'une transmission différée.

La requête de transmission peut dans ce contexte spécifier une seconde référence temporelle correspondant à la programmation de la diffusion du concert sur la chaîne de télévision.

Le réseau peut comprendre en outre un serveur d'interface de service auprès duquel la transmission d'une scène dans le monde virtuel est requise au préalable. Ainsi, que ce soit un fournisseur ou directement un utilisateur, un tel serveur d'interface peut offrir une interface adaptée pour recueillir les informations utiles pour produire une requête de transmission d'une scène selon un mode de réalisation.

Un tel serveur d'interface peut être un serveur WEB. Ce serveur est adapté pour recevoir une requête de scène de monde virtuel. Aucune limitation n'est attachée à l'interface qu'il peut proposer à cet effet. Il peut notamment offrir à ses utilisateurs une page WEB qui offrirait la restitution audio / vidéo de certaines scènes de monde virtuel. Cette page Web peut présenter des composants d'interface pour restituer une vidéo et/ou un contenu sonore correspondant à la scène captée conformément à la requête formulée par l'utilisateur: dans ce cas le flux de données obtenu par l'entité de captation est transmis au serveur Web en vue de sa restitution via une telle page Web. Un utilisateur d'un terminal se connecte alors à cette page et clique sur un composant d'interface pour déclencher la transmission d'une requête de flux de données à l'entité de captation et de ce fait, au niveau du terminal récepteur, la lecture de la vidéo représentant la scène de jeu vidéo captée virtuellement dans le monde virtuel selon un mode de réalisation de la présente invention. Selon un mode de réalisation, le terminal est connecté à l'entité de captation par l'intermédiaire d'un serveur Web qui produit la requête de captation. En particulier, le serveur Web peut recevoir le flux de données et restituer le flux de données via une page Web.

On peut également prévoir que ce serveur d'interface applique certains contrôles relatifs aux droits d'accès de l'entité qui lui a transmis cette requête.

Un deuxième aspect de la présente invention propose une entité de captation pour un service de transmission de scène d'un monde virtuel comprenant des moyens adaptés pour mettre en oeuvre un procédé de gestion de service selon le premier aspect de la présente invention.

Un troisième aspect de la présente invention propose un système de gestion pour un service de transmission de scène d'un monde virtuel comprenant une entité de captation selon le deuxième aspect et au moins un terminal adapté pour recevoir un flux de données fourni par cette entité de captation.

Un quatrième aspect de la présente invention propose un serveur d'interface pour un service de transmission de scène d'un monde virtuel, adapté pour :
- offrir une interface utilisateur permettant de requérir une transmission d'une scène d'un monde virtuel ;
- recevoir une requête de transmission de scène comprenant des informations de captation ; et
- requérir une transmission de ladite scène auprès d'une entité de captation selon le deuxième aspect.

Un cinquième aspect propose un programme d'ordinateur comportant des instructions pour la mise en oeuvre d'un procédé de captation selon le premier aspect de la présente invention lorsque ce programme est exécuté par un processeur.

Un sixième aspect concerne un terminal pour visualiser une scène dans un monde virtuel, le monde virtuel étant mis en oeuvre par une application numérique dont une occurrence est exécutée par un serveur d'hébergement applicatif et étant accessible via une entité virtuelle déclarée auprès d'une occurrence de ladite application. Le terminal comprend un module de connexion, via un réseau, à une entité de captation connectée au serveur d'hébergement applicatif. Le module peut être un module logiciel exécuté par un processeur, ou un module matériel (comprenant par exemple de l'électronique dédiée, ou un processeur et un logiciel associé). Le module est agencé pour envoyer une requête de transmission de la scène, la requête comprenant des informations de captation, de façon à ce que l'entité de captation déclare une entité virtuelle auprès de l'application numérique exécutée par le serveur d'hébergement applicatif, positionne l'entité virtuelle dans le monde virtuel sur la base desdites informations de captation, obtienne de la part du serveur d'hébergement applicatif un flux de données relatives à ladite scène dans le monde virtuel; et transmette le flux de données obtenu à destination dudit terminal.

D'autres aspects, buts et avantages de l'invention apparaîtront à la lecture de la description d'un de ses modes de réalisation.

L'invention sera également mieux comprise à l'aide des dessins, sur lesquels :
- la figure 1 illustre un réseau de gestion de service de transmission d'une scène d'un mode virtuel selon un mode de réalisation de la présente invention ;
- la figure 2 illustre les principales étapes d'un procédé de gestion selon un mode de réalisation de la présente invention ;
- la figure 3 illustre un système de gestion de service selon un mode de réalisation de la présente invention adapté pour retransmettre un évènement en différé ;
- la figure 4 illustre un système de gestion de service selon un mode de réalisation de la présente invention adapté pour retransmettre un évènement en direct ; et
- la figure 5 illustre une architecture détaillée d'une entité de captation selon un mode de réalisation de la présente invention.

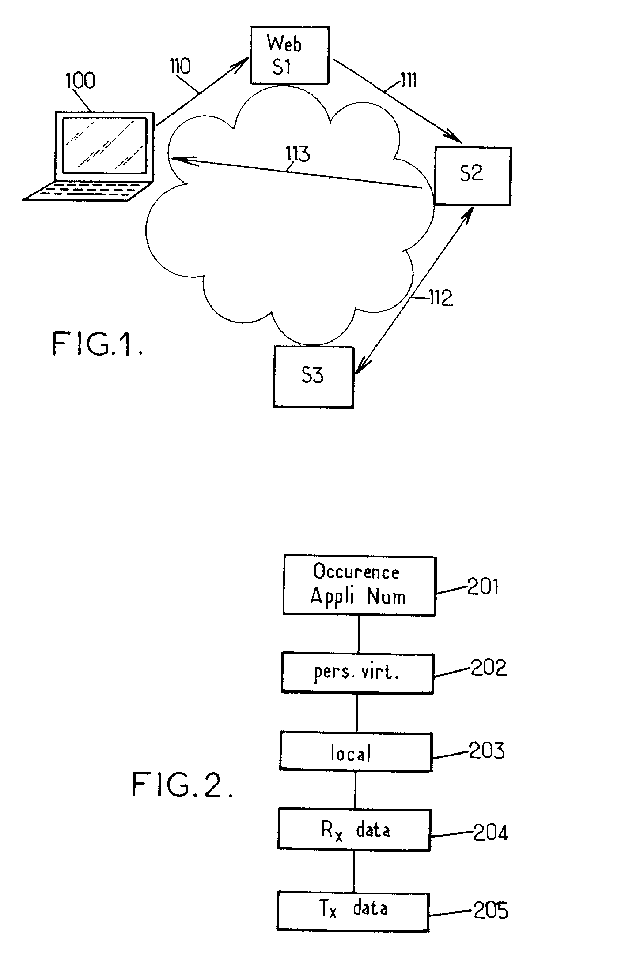

La figure 1 illustre un réseau de gestion de service de transmission d'une scène d'un mode virtuel selon un mode de réalisation de la présente invention. Ce réseau comprend un terminal 100 qui peut être un ordinateur par exemple, un serveur d'interface de type serveur WEB S1, un système de gestion de service S2 qui comprend une entité de captation selon un mode de réalisation et un serveur S3 d'hébergement applicatif adapté pour héberger la partie applicative du monde virtuel dans lequel la scène requise est à capter.

Ici, le terminal 100 peut se connecter 110 au serveur WEB S1 pour formuler sa requête pour une scène d'un monde virtuel. Le serveur WEB S1 traduit cette requête dans un langage compréhensible par le système de gestion S2 et lui transmet 111 cette requête ainsi traduite en lui indiquant les informations de captation correspondantes et éventuellement en complétant ces informations. Puis, sur la base des informations de captation, le système de gestion S2 déclenche les étapes du procédé visant à capter la scène requise. A cet effet, il échange des informations 112 avec le serveur S3 d'hébergement applicatif et reçoit in fine le flux de données correspondant. Puis, que ce soit en direct ou en diffusé, le système de gestion en vient à transmettre 113 ce flux de données dans le réseau. Dans un mode de réalisation, comme décrit en introduction, le flux de données reçu par le système de gestion S2 est transmis au serveur Web S1 en vue de sa restitution via une page Web accessible via ce serveur Web.

On peut prévoir que la transmission soit effectuée pour un serveur de transmission, notamment dans le cas de transmission en continu.

La figure 2 illustre les principales étapes du procédé de gestion de service selon un mode de réalisation de la présente invention.

On reçoit préalablement une requête de transmission d'une scène d'un monde virtuel. La réception de cette requête et les étapes ci-dessous peuvent être réalisées au niveau d'un même serveur ou bien elles peuvent délocalisées. En effet aucune limitation n'est attachée à la localisation des différentes fonctionnalités mises en oeuvre au cours du procédé considéré. On peut en effet dissocier un aspect de réception des requêtes reçues et de leur traitement d'un aspect de captation des scènes respectivement requises dans ces requêtes. On peut aisément prévoir que ces différents aspects soient mis en oeuvre à des emplacements distincts dans le réseau, ou encore de manière colocalisée.

Le système de gestion S2, à une étape 201, déclenche l'exécution d'une occurrence de l'application numérique correspondant au monde virtuel dans lequel une scène doit être captée. Cette étape peut être déclenchée soit sur réception de la requête de transmission lorsque cette requête indique par exemple le fait que la scène doit être captée immédiatement, soit encore en fonction d'une référence temporelle éventuellement indiquée dans la requête.

A une étape 202, on déclare un personnage ou une entité virtuelle auprès de l'application numérique. En fait, le système dispose d'au moins personnage virtuel pour cette application et pour accéder au monde virtuel. Cette déclaration correspond aux éventuels contrôles d'identification et d'authentification mis en oeuvre pour pénétrer dans le monde virtuel concerné. Cette étape dépend bien entendu du type d'application envisagé.

A une étape 203, on localise l'entité virtuelle dans le monde virtuel sur la base des informations de captation indiquées dans la requête.

Puis, à une étape 204, on reçoit un flux de données relatives à ladite scène dans le monde virtuel.

Ces étapes 201 à 204 sont effectuées sur la base d'échanges d'informations avec un serveur ou plusieurs serveurs hébergeant tout ou partie des applicatifs correspondants au monde virtuel visé. Ainsi, par exemple, lorsqu'il s'agit de l'application de type Second Life, les premiers échanges peuvent se faire avec un premier serveur. Si ce premier serveur n'est pas celui qui héberge la partie géographique du monde virtuel incluant la scène à capter alors il va indiquer un serveur qui l'héberge. Ainsi, l'entité de captation peut être amenée à être reliée à différents serveurs liés à l'application numérique au cours de ces étapes.

Ensuite, le flux de données peut être transmis, à une étape 205, soit de manière différée soit encore en direct à destination du ou des terminaux du réseau.

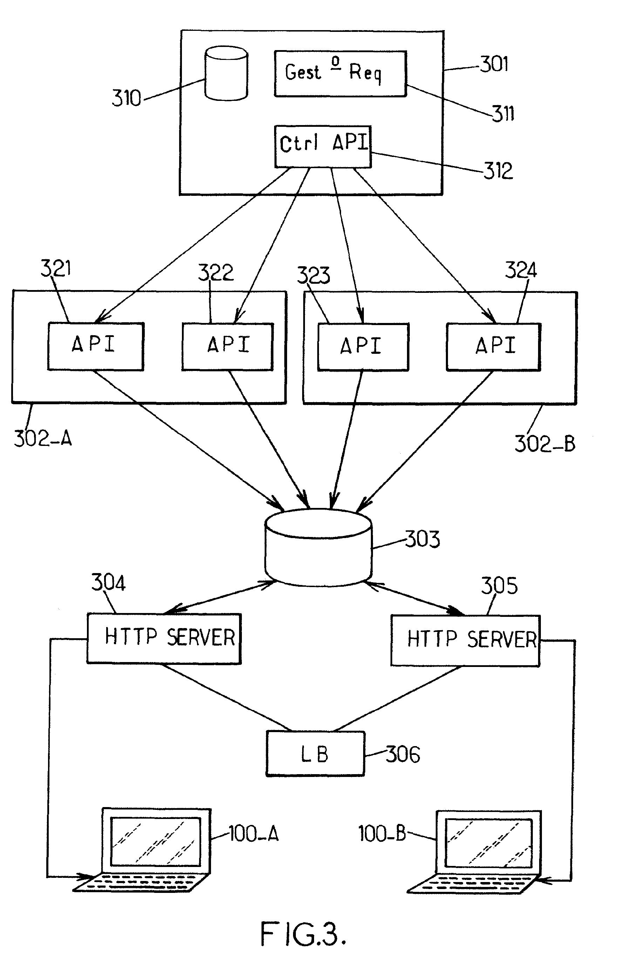

La figure 3 illustre un système de gestion de service selon un mode de réalisation de la présente invention adapté pour retransmettre un évènement en différé.

Ce système comprend un serveur de contrôle 301, une premier et une second entité de captation 302-A et 302-B, une base de données 303, des serveurs HTTP 304 et 305, éventuellement reliés à une entité de répartition de charge LB 306 (ou 'Load Balancing' en anglais), et enfin deux terminaux 100-A et 100-B. Le serveur S2 peut ici correspondre au serveur de contrôle 301 et aux entités de captation 302-A et 302-B. Le serveur S3 n'est pas illustré sur cette figure.

Un serveur d'interface de type serveur WEB peut être en amont du serveur de contrôle 301 1 même s'il n'est pas illustré ici. Il correspond au serveur WEB S1.

Le serveur de contrôle 301 comprend une entité de gestion de requête 311 adaptée pour gérer le stockage des requêtes de transmission de scène de monde virtuel dans une base de données 310 et une entité de contrôle 312 des différentes applications numériques correspondant aux différents mondes virtuels pour lesquels le service est offert. Ce serveur de contrôle peut contrôler plusieurs entités de captation selon un mode de réalisation de la présente invention. Cette architecture présente l'avantage de décupler les ressources en utilisant plusieurs plateformes sur lesquelles on souhaite déclencher une exécution des occurrences d'application numérique 302-A et 302-B. Toutefois, cet exemple n'est en rien limitatif et il convient de noter que toutes ces fonctionnalités (contrôle 301 et captation de scène 302-A et B) peuvent être co-localisées.

Sur la base des requêtes reçues, les étapes du procédé de gestion 201-204 sont déclenchées depuis la partie de contrôle. Elles sont réalisées au niveau d'une unité applicative (API) 321 ou 322 sur l'entité de captation 302-A ou encore au niveau de l'API 323 ou 324 sur l'entité de captation 302-B.

Après l'étape 204, ou tout au moins durant l'étape 204, le flux de données obtenu est alors stocké au niveau de la base de données 303 en vue d'une transmission en différé aux terminaux.

Puis, lorsque le temps de la transmission est venu, les données à transmettre pour offrir aux terminaux une scène du monde virtuel visé sont récupérées dans la base de données 303 par des serveurs HTTP 304 ou 305 qui se chargent de transmettre le flux de données aux terminaux concernés. Une entité de répartition de charge peut avantageusement permettre d'éviter des surcharges au niveau d'un des serveurs HTTP en répartissant ces transmissions sur un ensemble de serveurs HTTP.

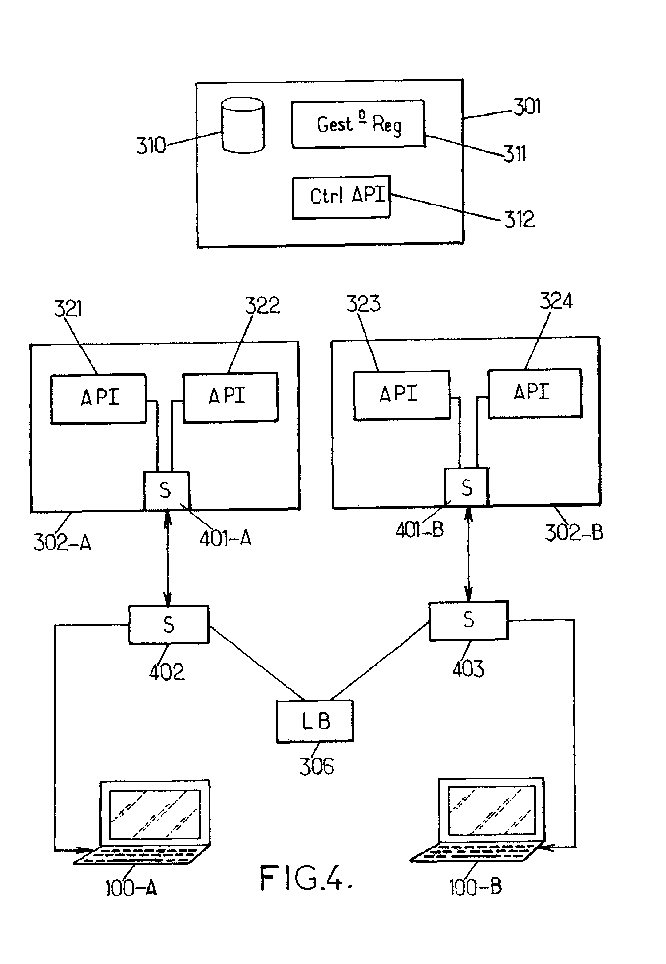

La figure 4 illustre un système de gestion de service selon un mode de réalisation de la présente invention adapté pour retransmettre un évènement en direct.

Ce système comprend un serveur de contrôle 301 comme à la figure 3, une premier et une second entité de captation 302-A et 302-B, des unités de transmission en continu (ou encore 'streaming') 401-A et 401-B, éventuellement reliées à une entité de répartition de charge LB 306 (ou 'Load Balancing' en anglais), et enfin deux terminaux 100-A et 100-B.

Un serveur d'interface de type serveur WEB peut être en amont du serveur de contrôle 301 même s'il n'est pas illustré ici.

Il convient de noter que les serveurs de gestion 302-A et 302-B comprennent chacun une unité S de 'streaming' 401-A et 401-B.

Ainsi, pendant l'étape 204, le flux de données reçu au niveau des serveurs de gestion est transféré en continu par les unités de 'streaming' 401-A et 402-B vers des serveurs de streaming 402 et 403. Ces derniers sont en charge de transmettre en continu ce flux de données vers les terminaux concernés. Dans ce système, il est donc possible de transmettre aisément des évènements en direct (ou 'live' en anglais).

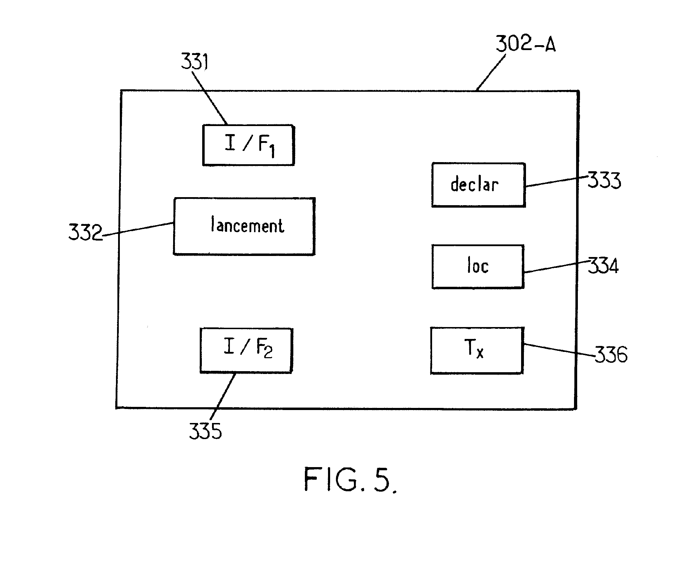

La figure 5 illustre une architecture détaillée d'une entité de captation 302-A ou 302-B selon un mode de réalisation de la présente invention de manière détaillée.

Une entité de captation 302-A comprend :
- une première unité de réception 331 adaptée pour recevoir une requête d'une scène dans le monde virtuel indiquant des informations de captation ;
- une unité de déclenchement 332 adaptée pour déclencher une exécution d'une occurrence de ladite application numérique ;
- une unité de déclaration 333 adaptée pour déclarer ledit personnage virtuel auprès de l'application numérique ;
- une unité de positionnement 334 adaptée pour positionner ladite entité virtuelle dans le monde virtuel sur la base desdites informations de captation ;
- une seconde unité de réception 335 adaptée pour obtenir un flux de données relatives à ladite scène dans le monde virtuel ; et
- une unité de transmission 336 adaptée pour transmettre le flux de données.

Un système de gestion S2 pour un service de transmission de scène d'un monde virtuel peut comprendre une telle entité de captation et au moins un terminal adapté pour recevoir un flux de données transmis par l'entité de captation.

Dans ce système, lorsque les informations de captation indiquent une référence temporelle, il est avantageux que le système de gestion comprenne en outre :
- une base de données 310 adaptée pour stocker les requête de transmission d'une scène du monde virtuel reçues ; et
- un gestionnaire de priorité 311 des requêtes adapté pour séquencer lesdites requêtes en fonction des références temporelles respectivement indiquées.

Ce gestionnaire de priorité a en charge le contrôle des entités de captation du système de gestion.

Dans le cas de transmission en différé, le système de gestion comprend en outre avantageusement une base de données 303 adaptée pour stocker le flux de données.

Le système de gestion S2 peut en outre comprendre au moins un serveur de transmission 304 ou 305 comprenant des moyens adaptés pour transmettre un flux de données stocké dans la base de données 303 au terminal.

Le système de gestion S2 peut comprendre en outre au moins un serveur de transmission en continu 402 en vue d'une transmission en direct du flux de données.

Dans un mode de réalisation de la présente invention, il est également prévu un serveur d'interface S1 adaptée pour :
- offrir une interface utilisateur permettant de requérir une transmission de scène d'un monde virtuel ;
- recevoir une requête de transmission de scène indiquant des informations de captation ; et
- requérir auprès de l'entité de captation la transmission de la scène conformément aux informations de captation.

## Revendications

1. Procédé de captation d'une scène dans un monde virtuel, le monde virtuel étant mis en oeuvre par une application numérique dont une occurrence est exécutée par un serveur d'hébergement applicatif et étant accessible via une entité virtuelle déclarée auprès d'une occurrence de ladite application, ledit procédé comprenant les étapes suivantes au niveau d'une entité de captation connectée au serveur d'hébergement applicatif et communiquant via un réseau avec un terminal:
/a/ recevoir de la part du terminal une requête de transmission de ladite scène comprenant des informations de captation;
/b/ déclarer (202) une entité virtuelle auprès de l'application numérique exécutée par le serveur d'hébergement applicatif;
/c/ positionner (203) ladite entité virtuelle dans le monde virtuel sur la base desdites informations de captation;
/d/ obtenir (204) de la part du serveur d'hébergement applicatif un flux de données relatives à ladite scène dans le monde virtuel; et
/e/ transmettre (205) le flux de données obtenu via ledit réseau à destination dudit terminal.

2. Procédé selon la revendication 1, dans lequel ledit terminal est connecté à ladite entité de captation par l'intermédiaire d'un serveur Web qui envoie ladite requête de transmission à l'entité de captation.

3. Procédé selon la revendication 1 ou 2, dans lequel le serveur Web reçoit ledit flux de données et restitue ledit flux de données via une page Web.

4. Procédé selon la revendication 1, dans lequel les informations de captation indiquent un type d'application numérique, ledit procédé comprenant en outre l'étape suivante avant l'étape /a/:
- sélectionner, en fonction du type d'application numérique indiqué par les informations de captation, l'application numérique à déclencher parmi une liste d'applications numériques.

5. Procédé selon la revendication 1, dans lequel les informations de captation indiquent des coordonnées spatiales dans le monde virtuel et un axe de visée de captation de la scène.

6. Procédé selon la revendication 1, dans lequel les informations de captation indiquent une référence temporelle, et dans lequel les étapes /b/ à /d/ sont déclenchées sur la base de ladite référence temporelle.

7. Procédé selon la revendication 1, dans lequel le flux de données obtenu est stocké dans une base de données en vue d'une transmission différée.

8. Procédé selon la revendication 1, dans lequel le réseau comprend en outre un serveur d'interface de service (S1), et dans lequel la transmission d'une scène dans le monde virtuel est requise au préalable via ledit serveur d'interface de service.

9. Entité de captation (401-A) pour un service de transmission (S2), à au moins un terminal du réseau, d'une scène dans un monde virtuel, le monde virtuel étant mis en oeuvre par une application numérique dont une occurrence est exécutée par un serveur d'hébergement applicatif et étant accessible via une entité virtuelle déclarée auprès de ladite application numérique, ladite entité de captation (401-A) étant connectable à un serveur d'hébergement applicatif et étant configurée pour communiquer via un réseau avec un terminal, et comprenant:
- une première unité de réception (331) adaptée pour recevoir de la part du terminal une requête d'une scène dans le monde virtuel indiquant des informations de captation;
- une unité de déclenchement (332) adaptée pour déclencher une exécution d'une occurrence de ladite application numérique du serveur d'hébergement applicatif;
- une unité de déclaration (333) adaptée pour déclarer ladite entité virtuelle auprès de l'application numérique du serveur d'hébergement applicatif;
- une unité de positionnement (334) adaptée pour positionner ladite entité virtuelle dans le monde virtuel sur la base desdites informations de captation;
- une seconde unité de réception (335) adaptée pour obtenir de la part du serveur d'hébergement applicatif un flux de données relatives à ladite scène dans le monde virtuel; et
- une unité de transmission (336) adaptée pour transmettre le flux de données au terminal.

10. Système de gestion (S2) pour un service de transmission de scène d'un monde virtuel, ledit système comprenant une entité de captation selon la revendication 9 et au moins un terminal adapté pour recevoir un flux de données transmis par l'entité de captation.

11. Système de gestion (S2) selon la revendication 10, dans lequel les informations de captation indiquent une référence temporelle;
ledit système de gestion comprenant en outre:
- une base de données (310) adaptée pour stocker les requêtes de transmission d'une scène du monde virtuel reçues; et
- un gestionnaire de priorité (311) des requêtes adapté pour séquencer lesdites requêtes en fonction des références temporelles respectivement indiquées.

12. Système de gestion (S2) selon la revendication 10, comprenant en outre une base de données (303) adaptée pour stocker le flux de données en vue d'une transmission différée.

13. Système de gestion (S2) selon la revendication 12, comprenant au moins un serveur de transmission (304) comprenant des moyens adaptés pour transmettre un flux de données stocké dans la base de données (303) au terminal.

14. Système de gestion (S2) selon la revendication 10, comprenant en outre au moins un serveur de transmission en continu (402) en vue d'une transmission en direct du flux de données.

15. Serveur d'interface (S1) pour un service de transmission de scène d'un monde virtuel, adapté pour:
- offrir une interface utilisateur permettant de requérir une transmission d'une scène d'un monde virtuel;
- recevoir une requête de transmission de scène comprenant des informations de captation; et
- requérir une transmission de ladite scène auprès d'une entité de captation selon la revendication 9.

16. Programme d'ordinateur comportant des instructions pour la mise en oeuvre d'un procédé de captation selon l'une quelconque des revendications 1 à 8 lorsque ce programme est exécuté par un processeur.

17. Terminal pour restituer une scène dans un monde virtuel, le monde virtuel étant mis en oeuvre par une application numérique dont une occurrence est exécutée par un serveur d'hébergement applicatif et étant accessible via une entité virtuelle déclarée auprès d'une occurrence de ladite application, le terminal comprenant
- des moyens pour formuler une requête de transmission d'une scène comprenant des informations de captation à transmettre via un réseau à une entité de captation connectée au serveur d'hébergement applicatif, de façon à ce que l'entité de captation déclare (202) une entité virtuelle auprès de l'application numérique exécutée par le serveur d'hébergement applicatif, positionne (203) ladite entité virtuelle dans le monde virtuel sur la base desdites informations de captation, obtienne (204) de la part du serveur d'hébergement applicatif un flux de données relatives à ladite scène dans le monde virtuel; et transmette (205) le flux de données obtenu à destination dudit terminal
- des moyens de réception et de restitution du flux de données obtenu par l'entité de captation.
